**Europäisches Patentamt**

**European Patent Office**

**Office européen des brevets**

(19)

(11) Veröffentlichungsnummer: **0 348 770**
**A1**

(12) # EUROPÄISCHE PATENTANMELDUNG

(21) Anmeldenummer: 89111049.6

(22) Anmeldetag: 19.06.89

(51) Int. Cl.⁴: **F24D 13/02**

(30) Priorität: 28.06.88 DE 3821791

(43) Veröffentlichungstag der Anmeldung:
03.01.90 Patentblatt 90/01

(84) Benannte Vertragsstaaten:
AT ES FR GB LU

(71) Anmelder: **NORINA Bautechnik GmbH**
**Regensburger Str. 334**
**D-8500 Nürnberg 30(DE)**

(72) Erfinder: **Höllfritsch, Erich, Dipl.-Volksw.**
**Rainwiesenweg 21**
**D-8501 Schwaig-Behringersdorf(DE)**

(74) Vertreter: **LOUIS, PÖHLAU, LOHRENTZ &**
**SEGETH**
**Kesslerplatz 1 Postfach 3055**
**D-8500 Nürnberg-1(DE)**

(54) **Boden mit einem Heizungselement und Verwendung eines solchen Bodens.**

(57) Es werden ein Boden mit einer aushärtenden Bodenschicht aus einem schütt- bzw. fliessfähigen Material und einem elektrischen Heizungselement, sowie Verwendungen eines derartigen Bodens beschrieben, wobei das Heizungselement aus elektrisch leitenden Teilchen besteht, die auf die noch nicht ausgehärtete Bodenschicht aufgestreut werden. Die elektrisch leitenden Teilchen sinken mindestens zum Teil in die noch nicht ausgehärtete Bodenschicht ein und werden in der ausgehärteten, verfestigten Bodenschicht festgehalten. Die elektrisch leitenden Teilchen sind miteinander verfilzt und wahllos in elektrisch leitendem Berührungskontakt. Zum Anschluss einer äusseren elektrischen Energiequelle an die das Heizungselement bildende Schicht aus den elektrisch leitenden Teilchen sind Anschlussorgane vorgesehen, die an voneinander entfernten Stellen mit dem Heizungselement kontaktiert sind. Ein solcher Boden kann an jeder beliebigen Stelle zur Anbringung von Installationseinrichtungen wie Steckdosen o.dgl. angebohrt bzw. ausgeschnitten werden, ohne dass dadurch das Heizungselement bzw. der Stromfluss durch das Heizungselement hindurch unterbrochen wird.

EP 0 348 770 A1

Die Erfindung betrifft einen Boden mit einer aushärtenden Bodenschicht aus einem schütt-bzw. fliessfähigen Material und einem elektrischen Heizungselement, sowie die Verwendung eines solchen Bodens.

Aus der DE 34 33 702 A1 ist ein Boden mit einem elektrischen Heizungselement bekannt, wobei auf einem Untergrund keramische Platten aufgebracht sind. Dort ist auf dem Untergrund eine Widerstandsfolie aufgeklebt, die aus einer Polyester-Deckschicht, einer mit Zu- und Ableitungen versehenen leitenden Zwischenschicht und einer Polyester-Unterschicht besteht. Bei der leitenden Zwischenschicht handelt es sich z.B. um eine Graphit-und/oder Russ-Schicht. Die keramischen Platten sind auf der freien Oberfläche der Polyester-Unterschicht mit Hilfe einer sowohl an der Oberfläche dieser Polyester-Unterschicht als auch an der der Sichtseite abgewandten Seite der keramischen Platten haftenden Klebemittelzusammensetzung aufgeklebt. Ein derartiger Boden weist infolge der zwischen einer Polyester-Unterschicht und einer Polyester-Oberschicht vorgesehenen leitenden Zwischenschicht einen relativ aufwendigen Aufbau auf. Ausserdem bedingt die Anordnung dieser Widerstandsfolie auf dem Untergrund einen nicht zu vernachlässigenden Arbeits-und Zeitaufwand, weil es erforderlich ist, diese Widerstandsfolie auf dem Untergrund sorgfältig zu verlegen. Ein weiterer Aufwand ist durch die Klebeverbindung der Widerstandsfolie auf dem Untergrund gegeben.

Eine heizbare Deckengipsplatte, die eine mit elektrischen Anschlusskontakten versehene Flächenheizschicht mit elektrisch halbleitendem Kunststoff aufweist, ist aus dem DE-GM 70 31 230 bekannt. Die Flächenheizschicht kann bei dieser Deckengipsplatte gitterartig ausgebildet und in die Platte eingegossen sein. Bei dieser Flächenheizschicht handelt es sich um eine besonders hergestellte Schicht, was sich auf die Herstellungskosten dieser Deckengipsplatte auswirkt. Ausserdem bedingt die Verlegung einer solchen heizbaren Deckengipsplatte einen nicht zu vernachlässigenden Arbeits- und Zeitaufwand.

Ein Verfahren zur Herstellung einer Bauplatte, insbes. einer Bodenplatte, mit elektrisch leitfähigen Einlagerungen ist aus der DE-AS 24 55 771 bekannt. Dort bestehen die Einlagerungen aus leicht biegsamen, jeweils in einer oder in mehreren Reihen angeordneten Drahtstiften oder Drahtsträngen, die in das noch nicht verfestigte schütt-oder fliessfähige Plattenausgangsmaterial derart eingebracht werden, dass sie die Ober- und die Unterseite der Bauplatte zugleich berühren. Wenn bei einer solchen Bauplatte Drahtstifte zur Anwendung gelangen, so werden diese Drahtstifte von einem auf einen Dorn aufgewickelten Draht abgelängt und in das noch nicht verfestigte Plattenausgangsmaterial eingeschossen. Unabhängig davon, ob Drahtstifte oder Drahtstränge zur Anwendung gelangen, muss dieses elektrisch leitende Material die Ober- und die Unterseite der Bauplatte zugleich berühren, um die mit einer solchen Bauplatte erwünschten Eigenschaften, statische Aufladungen von der Oberfläche der Bauplatte zu deren elektrisch leitendem Untergrund abzuleiten, zu gewährleisten.

Der Erfindung liegt die Aufgabe zugrunde, einen Boden der eingangs genannten Art mit einem elektrischen Heizungselement zu schaffen, der einfach und zeitsparend herstellbar ist.

Diese Aufgabe wird erfindungsgemäss dadurch gelöst, dass das Heizungselement aus auf die noch nicht ausgehärtete Bodenschicht aufgestreuten elektrisch leitenden Teilchen besteht, die mindestens zum Teil in die noch nicht ausgehärtete Bodenschicht einsinken und in der ausgehärteten Bodenschicht festgehalten werden, und die miteinander verfilzt und wahllos in elektrisch leitendem Berührungskontakt sind, und dass Anschlussorgane zum Anschluss einer äusseren elektrischen Energiequelle vorgesehen sind, die an voneinander entfernten Stellen mit dem Heizungselement kontaktiert sind. Dadurch, dass das heizungselement aus wahllos aufgestreuten elektrisch leitenden Teilchen besteht, die miteinander zu einer Einheit verfilzt und dabei in elektrisch leitendem Berührungskontakt sind, ergibt sich ein einfacher Aufbau des Bodens, und die Möglichkeit, den Boden auch von ungelernten Arbeitskräften zeitsparend mit dem elektrischen Heizungselement ausbilden zu können. Zu diesem Zweck ist es nur erforderlich, die elektrisch leitenden Teilchen in einer bestimmten Menge pro Flächeneinheit auf die noch nicht ausgehärtete, d.h. auf die noch nicht verfestigte Bodenschicht aufzustreuen. Die Menge der auf die noch nicht ausgehärtete Bodenschicht aufzustreuenden elektrisch leitenden Teilchen pro Flächeneinheit des herzustellenden Bodens hängt von der Viskosität der noch nicht ausgehärteten Bodenschicht und von dem Gewicht der elektrisch leitenden Teilchen ab. Bei den Anschlussorganen zum Anschluss der externen elektrischen Energiequelle an das aus den elektrisch leitenden Teilchen bestehende Heizungselement kann es sich um Bänder, Schienen, Platten o.dgl. handeln. Die Kontaktierung der Anschlussorgane mit dem Heizungselement kann einfach durch Auflegen der Anschlussorgane auf die Schicht aus wahllos aufgestreuten elektrisch leitenden Teilchen oder bspw. durch eine Lötverbindung erfolgen. Ein weiterer erheblicher Vorteil eines derartigen Bodens besteht darin, dass seine Oberfläche durch die aufgestreuten elektrisch leitenden Teilchen wesentlich abriebfester ist als ein entsprechender Boden aus demselben schütt- bzw. fliessfähigen Material, auf den keine das elektrische Heizungselement ergebenden elektrisch leitenden Teilchen aufgestreut sind.

Bei den elektrisch leitenden Teilchen für das Heizungselement kann es sich um Abfalldrahtstükke handeln. Als besonders vorteilhaft hat es sich erwiesen, dass die Abfalldrahtstücke Litzendrahtstücke sind. Ein solcher Boden weist demnach den besonderen Vorteil auf, dass Abfalldrähte nicht mit einem grossen Wärmeenergieaufwand wieder eingeschmolzen werden müssen, um das Material des Abfalldrahtes im Recycling wieder zur Verfügung zu stellen, sondern dass Abfalldraht einfach und mit erheblich geringerem Eneregieaufwand zerkleinert Anwendung findet.

Bei den elektrisch leitenden Teilchen für das elektrische Heizungselement kann es sich auch um Metallspäne handeln. Auch hierbei gilt, dass das Recycling dieser Metallspüne bei Anwendung im beschriebenen Boden wesentlich energiesparender möglich ist, als wenn derartige Metallspäne zur Wiederverwendung des Metalles aufgeschmolzen werden.

Infolge der Tatsache, dass der beschriebene, mit einem elektrischen Heizungselement ausgebildete Boden eine vergleichsweise gute Abriebfestigkeit aufweist, hat es sich als zweckmässig erwiesen, den erfindungsgemässen Boden auch bei Industrieböden zu verwenden. Eine andere Verwendungsmöglichkeit des erfindungsgemässen Bodens ist bei Flächendoppelböden gegeben, wie sie bspw. in der DE-OS 26 11 372 beschrieben sind. Ein derartiger mit einem elektrischen Heizungselement der beschriebenen Art versehener Boden kann in vorteilhafter Weise an jeder beliebigen Stelle zur Anordnung von Installationseinrichtungen wie Steckdosen u.dgl. angebohrt bzw. aufgeschnitten werden, ohne dass durch das Heizungselement bzw. der Stromfluss durch das Heizungselement hindurch unterbrochen wird.

## Ansprüche

1. Boden mit einer aushärtenden Bodenschicht aus einem schütt- bzw. fliessfähigen Material und einem elektrischen Heizungselement,
**dadurch gekennzeichnet,**
dass das Heizungselement aus auf die noch nicht ausgehärtete Bodenschicht aufgestreuten elektrisch leitenden Teilchen besteht, die mindestens zum Teil in die noch nicht ausgehärtete Bodenschicht einsinken und in der ausgehärteten Bodenschicht festgehalten werden, und die miteinander verfilzt und wahllos in elektrisch leitendem Berührungskontakt sind, und dass Anschlussorgane zum Anschluss einer äusseren elektrischen Energiequelle vorgesehen sind, die an voneinander entfernten Stellen mit dem Heizungselement kontaktiert sind.

2. Boden nach Anspruch 1,

**dadurch gekennzeichnet,**
dass die elektrisch leitenden Teilchen Abfalldrahtstücke sind.

3. Boden nach Anspruch 2,
**dadurch gekennzeichnet,**
dass die Abfalldrahtstücke Litzendrahtabschnitte sind.

4. Boden nach Anspruch 1,
**dadurch gekennzeichnet,**
dass die elektrisch leitenden Teilchen Metallspäne sind.

5. Verwendung eines Bodens nach einem der Ansprüche 1 bis 4 bei einem Industrieboden.

6. Verwendung eines Bodens nach einem der Ansprüche 1 bis 4 bei einem Flächendoppelboden.

| | | Nummer der Anmeldung |
|---|---|---|
| Europäisches Patentamt | EUROPÄISCHER RECHERCHENBERICHT | EP 89 11 1049 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 347 766 (KONINKLIJKE FABRIEK INVENTUM FABRIEK VAN INSTRUMENTEN EN ELEKTRISCHE APPARATEN N.V.) * Seite 3, Absatz 3; Anspruch 1 * --- | 1 | F 24 D 13/02 |
| A | EP-A-0 004 188 (SEKISUI KAGAKU KOGYO K.K.) * Zusammenfassung * --- | 1 | |
| A | DE-U-7 407 884 (ARMBRUSTER) * Anspruch 1 * ----- | 1 | |

| | RECHERCHIERTE SACHGEBIETE (Int. Cl.5) |
|---|---|
| | F 24 D |

Der vorliegende Recherchenbericht wurde für alle Patentansprüche erstellt

| Recherchenort | Abschlußdatum der Recherche | Prüfer |
|---|---|---|
| DEN HAAG | 06-10-1989 | VAN GESTEL H.M. |